# EUROPÄISCHE PATENTSCHRIFT

(11) **EP 0 456 958 B1**
(45) Veröffentlichungstag und Bekanntmachung des Hinweises auf die Patenterteilung: **29.06.1994**
(21) Anmeldenummer: 91101045.2
(22) Anmeldetag: 28.01.1991
(51) Int. Cl.: E03F 5/04

(54) **Schlammfang**
Sludge collector
Collecteur de boues

(30) Priorität: 12.05.1990 DE 9005405 U
(43) Veröffentlichungstag der Anmeldung: 21.11.1991
(73) Patentinhaber: PASSAVANT-WERKE AG, 65322 Aarbergen 7 (DE)
(72) Erfinder: Heinz, Hans-Willi, W-5409 Holzappel (DE); Diefenbach, Günter, W-6255 Dornburg 1 (DE)

(56) Entgegenhaltungen:
- EP-A- 0 286 562
- DE-A- 3 620 182
- DE-C- 819 024
- Passavant, Katalogblatt K183-2, July 1973 Aarbergen

## Beschreibung

Die Erfindung betrifft einen befahr- oder begehbaren Schlammfang für Oberflächen- und Abwasser zum Einbau ins Erdreich gemäß dem Oberbegriff des Anspruchs 1 (siehe z.B. Passavant Katalogblatt K 183-2, Aarbergen , Juli 73.). Derartige Schlammfangbehälter müssen in unterschiedlicher frostfreier oder nicht frostfreier Tiefe eingebaut werden und demzufolge mit Schaftbauteilen an die Oberfläche angepaßt werden, damit die durch einen Schachtdeckel verschließbare Abdeckplatte bündig mit der Fläche versetzt werden kann.

Da der Schlammfanginhait bei Aufstau nicht in das Erdreich gelangen darf, ist vorgeschrieben, die Schaftbauteile untereinander und gegen den Schlammfangbehälter abzudichten (DIN 4034).

Die Aufgabe, eine zuverlässige Abdichtung für diese Bauteile zu finden, wird gemäß der Erfindung mit den Merkmalen des kennzeichnenden Teils des Anspruchs 1 gelöst. Aus DE-A 819 024 ist eine Verbindung von rohrförmigen Gehäuseteilen mittels eines U-förmig profilierten Spannbandes bekannt. Der vorzugsweise als Rundschnurring ausgebildete Dichtring wird um den Zentrieransatz gelegt und fügt sich dann zwischen die beiden Endflansche. Um die Verkehrslast von dem Schlammfangbehälter weitgehend fernzuhalten, wird erfindungsgemäß vorgeschlagen, die Abdeckplatte das oberste Schaftbauteil überkragend auszubilden. Innerhalb der Überkragung ist an ihrer Unterseite eine Nut vorgesehen, die den oberen Flansch des obersten Schaftbauteils aufnimmt. Auf diese Weise ist die Abdeckplatte verschiebesicher gelagert. Eine Abdichtung wird an dieser Stelle nicht gefordert.

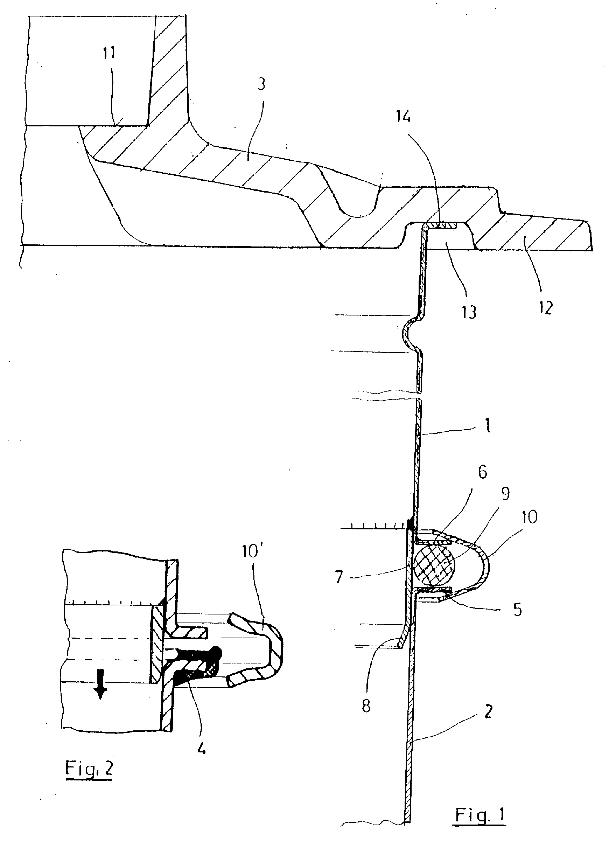

Aus der Zeichnung ist eine erfindungsgemäße dichte Verbindung zweier Schaftbauteile 1, 2 und die Auflagerung der Abdeckplatte 3 (Fig. 1) zu sehen. Fig. 2 zeigt einen Schnitt durch eine Verbindung mit einem anders ausgebildeten Dichtring 4. Beide Schaftbauteile 1, 2 besitzen Endflansche 5, 6. Das untere Ende des oberen Schaftbauteils 1 ist mit einem Zentrieransatz 7 versehen, der mit seinem konischen unteren Rand 8 in das untere Schaftbauteil 2 eingreift und so die Seitenverschiebung verhindert. Um den Zentrieransatz 7 ist ein Rundschnurring 9 gelegt, der von dem doppelt konischen, aufweitbaren Spannring 10 zwischen den Endflanschen 5, 6 eingespannt wird.

Die Abdeckplatte 3, die in der Auflagefläche 11 einen (nicht dargestellten) Schachtdeckel aufnimmt, ist so weit auskragend, daß die Verkehrslast über die Auskragung 12 in den Untergrund geleitet wird und somit der Schlammfangbehälter und die Schaftbauteile größtenteils lastfrei gehalten werden. Am Übergang zur Auskragung 12 ist an der Unterseite eine Ringnut 13 vorgesehen, in der der obere Endflansch 14 des obersten Schaftbauteils 1 Platz findet. Die Ringnut ist gerade so breit, daß die Abdeckplatte 3 verschiebesicher gelagert ist.

Fig. 2 zeigt eine Dichtung in Form einer Stülpmanschette 4 mit U-Profil, deren Außenkontur dem anderen Endflansch und dem Innenprofil des Spannrings 10' angepaßt ist.

## Patentansprüche

1. Befahrbarer Schlammfang für Oberflächen- und Abwasser zum Einbau ins Erdreich, enthaltend einen Schlammfangbehälter, lösbar und dichtend auf den Behälter aufgesetzte aneinanderanschließende Schaftbauteile (1, 2) und eine durch einen Schachtdeckel verschließbare Abdeckplatte (3), **dadurch gekennzeichnet,** daß die Schaftbauteile (1, 2) untereinander und mit dem Schlammfangbehälter durch einen die Endflansche (5, 6) übergreifenden, doppelt konischen, im Querschnitt v-förmigen Spannring (10, 10′) verbunden sind, daß das im eingebauten zustand jeweils obere Schaftbauteil (1) mit einem Zentrieransatz (7, 8) versehen ist, der in das im eingebauten Zustand jeweils untere Schaftbauteil, (2) eingreift und daß ein zwischen den Endflanschen (5,6) und dem Spannring (10,10′) um den Zentrieransatz (7,8) gelegter Dichtring (4,9) angeordnet ist.

2. Schlammfang nach Anspruch 1, **dadurch gekennzeichnet,** daß als Dichtring ein zwischen die Flansche (5, 6) und um den Zentrieransatz (7, 8) gelegter Rundschnurring (9) verwendet wird.

3. Schlammfang nach Anspruch 1, **dadurch** **gekennzeichnet**, daß als Dichtring ein U-förmig über einen der Flansche gesteckter Manschettenring (4) vorgesehen ist.

4. Schlammfang nach einem der vorstehenden Ansprüche, **dadurch gekennzeichnet,** daß die Abdeckplatte (3) das oberste Schaftbauteil (1) außen überkragt.

5. Schlammfang nach Anspruch 4, **dadurch** **gekennzeichnet,** daß die Abdeckplatte (3) innerhalb der Überkragung (12) eine Ringnut (13) zum Eingriff des dort mit einem Flansch (14) versehenen Schaftbauteils (1) aufweist.

## Claims

1. Passable sludge trap for surface and waste water to be installed into the soil, including a sludge collecting tank, removable shaft components (1, 2) which are tightly mounted onto the tank and a cover plate (3) closed by a manhole cover, **characterized in that** the shaft components (1, 2) are connected to each other and to the sludge collecting tank by a biconical V-type locking ring (10, 10') overlapping the terminal flanges (5, 6), that the upper shaft component (1), when mounted, is provided with a spigot (7, 8) which meshes into the lower shaft component (2), when mounted and, finally, that a sealing ring is provided (4, 9) around the spigot (7, 8) arranged between the terminal flanges (5, 6) and the locking ring (10, 10′).

2. Sludge trap according to claim 1, **characterized in that** the sealing ring used around the spigot (7, 8) and between the flanges (5, 6) is an O-ring (9).

3. Sludge trap according to claim 1, **characterized in that** an U-shaped sleeve (4) which is attached to one flange serves as sealing ring.

4. Sludge trap according to one of above claims, **characterized in** **that** the cover plate (3) protrudes the upper shaft component (1) at the outside.

5. Sludge trap according to claim 4, **characterized in that** the cover plate (3) is provided with a groove (13) within the overhang (12) into which the shaft component (1) meshes with its flange (14) provided for that purpose.

## Revendications

1. Bassin de dépôt de boue praticable pour les eaux de surface et résiduelles pour l'installation dans la terre, comprenant un récipient de dépôt de boue, des éléments de construction à tige (1, 2) amovibles mais montés de manière étanche au récipient et une plaque de recouvrement (3) qui peut être fermée par un couvercle de regard **caractérizé en ce que** les éléments de construction à tige (1, 2) sont reliés l'un à l'autre et au récipient de dépôt de boue par un anneau tendeur biconique de section transversale en V recouvrant les brides d'extrémité (5, 6), et que l'élément de construction à tige supérieur installé (1) est pourvu d'un rebord de centrage (7, 8) lequel avance dans l'élément de construction à tige inférieur (2) installé et, finalement, qu'un anneau d'étanchéité est placé autour du rebord de centrage (7, 8) se trouvant entre les brides d'extrémité (5, 6) et l'anneau tendeur (10, 10′)

2. Bassin de dépôt de boue selon revendication 1, **caractérizé en ce qu**'un joint torique est utilisé comme anneau d'étanchéité placé entre les brides (5, 6) et autour du rebord de centrage (7, 8).

3. Bassin de dépôt de boue selon revendication 1, **caractérizé en ce que** l'anneau d'étanchéité utilisé consiste dans un cercle de couverture en U (4) monté à une bride.

4. Bassin de dépôt de boue selon l'une des revendications susmentionnées, **caractérizé en ce que** la plaque de recouvrement (3) déborde l'élément de construction à tige supérieur (1) à l'extérieur.

5. Bassin de dépôt de boue selon revendication 4, **caractérizé en ce que** le porte-à-faux (12) de la plaque de recouvrement (3) est muni d'une rainure (13) dans laquelle engrène la bride (14) de l'élément de construction à tige (1).
